# EUROPEAN PATENT SPECIFICATION

(11) **EP 2 495 519 B1**
(45) Date of publication and mention of the grant of the patent: **20.09.2017**
(21) Application number: 12157600.3
(22) Date of filing: 29.02.2012
(51) Int. Cl.: F27B 3/20, F27B 3/22, F27D 1/12, C21C 5/52

(54) **Method of installing a burner and/or injector panel apparatus and method of treating metal using the same**
Verfahren zur Installation eines Brenner- und/oder einer Injektorplattenvorrichtung sowie Verfahren zur Behandlung von Metall damit
Procédé d'installation d'un brûleur et/ou appareil pour panneau d'injecteur et procédé de traitement métallique l'utilisant

(30) Priority: 01.03.2011 US 201113038315
(43) Date of publication of application: 05.09.2012
(73) Proprietor: L'Air Liquide Société Anonyme pour l'Etude et l'Exploitation des Procédés Georges Claude, 75007 Paris (FR)
(72) Inventor: Eyfa, Yury, Smyrna, GA Georgia 30080 (US)
(74) Representative: De Vleeschauwer, Natalie Y.L.D.

(56) References cited:
- EP-A1- 1 835 039
- DE-U1- 8 908 577
- JP-A- 11 037 663
- US-A- 3 100 461
- NORMAN L KOTRABA: "Oxy-fuel burner experience at Georgetown Steel Corp", IRON AND STEEL ENGINEER,, vol. 61, no. 12, 1 December 1984 (1984-12-01), pages 17-19, XP001267594,

## Description

The present invention relates to a burner and/or injector panel apparatus, methods of installation and use of the same in a metal-melting furnace, and metal-melting furnace including the same. More particularly, the present invention relates to a sump burner and/or injector panel apparatus, methods of use and installation of the same in a sump area of an electric arc furnace, and an electric arc furnace including the same.

One type of metallurgical process, steelmaking, is very well developed. In general, an electric arc furnace (EAF) is used to make steel by application of an electric arc to melt one or more of scrap metal and/or other alternative iron bearing feed stocks and alloys that are placed within the furnace. One type of EAF has hemispherical lower bowl made of metal. The bottom and sides of the lower bowl are lined with a refractory material forming the hearth. Extending vertically from the bowl are water-cooled sidewalls. Extending between the sidewalls over a molten bath of metal (contained by hearth) is a roof. Electrodes extend through the roof and into the bath. EAFs of the eccentric bottom tapping (EBT) type also include a sump area which is lined with refractory material. The sump area serves the function of containing the molten steel as it is poured from the EAF through a tapping hole.

Generally speaking, scrap metal, or charges, are dumped into the EAF through an opening. Typically these charges further include carbon particulate and other slag forming materials. Other known processes comprise using a ladle for hot or heated metal from a blast furnace and inserting it into the EAF furnace, such as by injection of the DRI by a lance.

There are numerous phases of charge processing in an EAF furnace and/or an EAF-like furnace.

In the melting phase, the electric arc and burners melt the charge burden into a molten pool of metal (melted metal), called an iron carbon melt, which accumulates at the bottom or hearth of the furnace. Thermal energy beyond that supplied by the arc may be provided by burners radially distributed around the furnace. Slag formers such as calcium oxide or magnesium oxide are sometimes injected into the molten pool with one or more injectors.

Most commonly, after melting the charge, an electric arc furnace proceeds to a refining and/or decarburization phase. In this phase, the metal melt continues to be heated by the arc until slag forming materials combine with impurities in the iron carbon melt and rise to the surface as slag. When the iron carbon melt reaches a critical temperature which allows a carbon boil, the charged carbon in the melt combines with any oxygen present in the bath to form carbon monoxide bubbles which rise to the surface of the bath, forming foaming slag. The foaming slag acts as an insulator throughout the furnace.

Further heating and processing is realized by a decarburization process wherein, in typical embodiments of the prior art utilizing advanced or more modem EAF techniques, a high velocity, usually supersonic, flow(s) of oxygen is blown into the metal bath with either lances or burner/lances to decarburize the bath by oxidation of the carbon contained in the bath, forming CO and/or CO₂ when combined with the available or excess carbon in the bath. The burner(s)/lance(s) act to more uniformly melt the charge and lessen, or prevent, overheating and minimize the time required for the melt and time that the arc is created.

By injecting the metal bath or liquid metal with oxygen, the dissolved carbon content of the bath can be reduced to a selected or reduced level. It is commonly regarded that if an iron carbon melt is under 2% carbon, the melt becomes steel. EAF steel making processes typically begin with burdens having less than 1% carbon. The carbon in the steel bath is continually reduced until it reaches the content desired for producing a specific grade of steel, such as, for example, and not by way of limitation, down to less than 0.1% for low carbon steels.

Additional chemical energy in the form of carbon or coke particles may also be injected by an injector. Alternatively, a single apparatus (burner/injector) may be used to provide the flame and inject particulate carbon/coke or other slagging materials. Typically, the carbon or coke flow is injected with the aid of a fluidizing gas flow of compressed air, natural gas, nitrogen, and/or the like.

Collectively, burners, lances, injectors, burner/lances, and burner/injectors may be referred to as burners and/or injectors.

One of the problems associated with EAFs is the existence of cold spots. The charged scrap or charge rapidly melts at hot spots located at regions of highest electric current density, but often remains un-melted at cold spots located at regions of lowest electric current density). This creates harsh conditions for the portion of the furnace wall and refractory lining located at the hot spots due to excessive exposure to heat from the arc during the latter portions of the melt down cycle. Scrap located in the cold spot regions receives heat from the arc at a reduced rate during the melt down cycle, thereby creating the cold spots. To melt charge scrap in the cold spots, flames from burner and/or injector apparatuses are directed towards the cold spots.

The cold spots are typically formed in areas further away from the furnace arc as scrap located in these areas receives electrical energy at a reduced rate per ton of scrap. One example of a cold spot is the region in line with a bisection of the angle between the electrodes where current density is relatively lower. Another example of a cold spot is the sump area which includes the tapping spout, due to its location away from the arc. Still another cold spot occurs at the slag door due to excessive heat losses to ambient air which infiltrates through this area. An even further common source for cold spots in furnaces occurs at the places where additional materials are injected, such as slag forming material, direct reduced iron, lime, etc., (which is inserted through a slag door or through an opening in the furnace side wall) due to the heat consumption of these materials as they melt down.

Prior art solutions to these challenges have been to incorporate additional burners and/or injectors around the furnace that target the cold spots. Electric arc furnaces equipped with burners and/or injectors located at cold spots have improved uniformity of scrap melting and have reduced build-ups of materials at the cold spots. Their location is chosen to avoid further overheating of hot spots that result from the rapid melting of scrap located between the electrode and the furnace shell. More specifically, the burners and/or injectors are located as far away from hot spots as is practically possible and the burner flame outlet opening direction is chosen so that flame penetration occurs predominantly into the scrap pile located at the cold spots and not to already heated portions of the furnace.

The burners and/or injectors are typically radially distributed around the furnace. Because the sump area is flooded with molten metal during tapping, burners and/or injectors are not installed in the sidewalls. Rather, these sump burners and/or injectors are inserted through and mounted to a balcony panel which forms a ceiling over the sump area. The balcony panel is rigidly attached to the sidewalls and may be distinguished from the EAF roof which is retractable from the sidewalls.

Burners and/or injectors are subjected to harsh conditions in EAFs, including intense radiative heat, convective heat transfer from hot furnace gases, slagging caused by splashing slag, and blowback of injected oxygen. In order to prolong the useful life of such burners and/or injectors, they are often mounted in panels that at least partially shield them from such harsh conditions. The panels are sometimes water-cooled.

Collectively, a burner, lance, burner/lance, injector, burner/lance/injector, or burner/injector mounted in such a panel may be referred to as burner and/or injector panel apparatus.

Typically, oxygen injection for the decarburization must wait until the melting phase of the process is substantially complete before starting high velocity injection of oxygen. This is since the burners cannot effectively deliver high velocity oxygen before then because some portions of unmelted charge may exist between the burners/lances and the liquid metal or metal melt. The oxygen flow would be deflected, potentially causing severe damage to the furnace and burner/injector panel.

This fact is further aggravated by the generally spherical shape of most EAF furnace structures. Melting of the metal typically occurs in the middle, lower portion of the melt and expands to fill the sides. Early in the melting phase a high velocity oxygen stream has less effect and/or ability to penetrate a not fully melted charge (metal) to decarburize the metal melt.

The same philosophy that is used in selecting the location of additional burner panel apparatuses is used to select the location of other injector apparatuses or burner/injectors for use in decarburization. When located adjacent the cold spots, the exothermic energy of melt refining can be used more effectively to melt the scrap without overheating the hot spots.

The discharge velocity of the oxygen stream from the burner and/or injector apparatus is to be chosen to allow the injected jet of oxygen to penetrate the slag and to react with the iron-carbon melt without excessive molten metal splashing on the furnace walls and electrode(s). However, inadvertent metal splashing does occur and is a common cause of apparatus failure. Those skilled in the art understand that the angle formed by the jet of oxygen and the horizontal slag surface (termed angle of attack) must not be too small or the injected jet of oxygen may not penetrate into the slag deeply enough. They further understand that the angle of attack must not be too great or blow back may occur with damage to the burner and/or injector apparatus.

Combined injection of carbon and oxygen via various apparatus, including dedicated lances in and around the furnace wall has become a common practice for adding extra heat to the process. Typically, the supply of carbon flow for injection is obtained from a carbonaceous material dispenser, such as a compressed gaseous carrier comprising compressed air, natural gas, nitrogen, and/or the like.

The use of the burners together with carbon and oxygen lances has allowed electric steelmakers to substantially reduce electrical energy consumption and to increase furnace production rate due to the additional heat input generated by the oxidation of carbon, and by significant increases in electric arc thermal efficiency achieved by the formation of a foamy slag layer that insulates the electric arc from heat losses. The foamy slag also stabilizes the electric arc and therefore allows for a higher electrical power input rate. The foamy slag layer is created by CO bubbles which are formed by the oxidation of injected carbon to CO. The increased flow of injected carbon creates increased localized CO generation. Accordingly, most EAF furnace units also comprise a post production means for removing or reducing CO levels in the off gas such as post-combustion burners. Mixing of the CO with oxygen inside of the electric arc furnace is desirable but very difficult to arrange without excessive oxidation of the slag and electrodes. Accordingly, the art field has developed postproduction means for treating the high CO content of the off gas.

Most modem electric arc furnaces are equipped with all or some of the above-mentioned means for auxiliary thermal and/or chemical energy input. Along with improvements in the design and operation of metal melting furnaces have come improvements in panel design. For example, various burner panel configurations are disclosed in EP 1 835 039 A1, U.S. Patent No. 4,703,336; U.S. Patent No. 5,444,733; U.S. Patent No. 6,212,218; U.S. Patent No. 6,372,010; U.S. Patent No. 5,166,950; U.S. Patent No. 5,471,495; U.S. Patent No. 6,289,035; U.S. Patent No. 6,614,831; U.S. Patent No. 5,373,530; U.S. Patent No. 5,802,097; U.S. Patent No. 6,999, 495; and U.S. Patent No. 6,342,086. Such prior art patents have proven to be beneficial. For example, U.S. Patent No. 6,999,495 has found wide applicability for increasing spatial energy coverage in a furnace. Likewise, U.S. Patent No. 6,614,831 has found applicability in extending the reach of various tools, such as a burner or a lance, into the interior of a furnace.

Because sump burner and/or injector panel apparatuses are installed outside of the furnace area enclosed by the hearth, they are located a relatively greater distance from the surface of the molten metal and cold spots. Because the flame, oxygen jet, or particle stream must reach farther before it reaches the molten metal or cold spot, the jet becomes relatively less coherent in comparison to jets which are injected from relatively closer locations. Thus, the flame, oxidant, or particles are no longer directed to a relatively small area and the effectiveness of the jet is very limited.

Thus, it is an object of the invention to provide improved sump burner and/or injector apparatuses and methods and furnaces using the same that do not suffer from as much loss of jet coherence.

Many configurations currently exist for burner and/or injector panel apparatuses. For sump burner and/or injector panel apparatuses, they are typically mounted and located outside the hearth area on the top of the sump in the balcony panel. These sump burner and/or injector panel apparatuses typically include a burner attached to a square or rectangular mounting plate. The mounting plate is placed inside a corresponding square or rectangular opening in the balcony panel and attached to the balcony panel. The square or rectangular opening is done because it is simpler to route the cooling circuit in the panel around a square or rectangular opening with the use of straight pipes and elbow joints. Regardless of the particular shape employed, such typical sump burner and/or injector panel apparatuses have a fixed position with respect to the balcony panel. Thus, the direction of the flame, or injection of the oxidant or particles is fixed and may not be easily changed. More specifically, the angular orientation of the apparatus in each of the x, y, and z axes is fixed. If the orientation of the burner and/or injector in the fixed position is not well designed, the flame, oxidant or particles may be injected outside of the target area of the bath, such as a cold spot. In this case, the furnace must be shut down and the burner and/or injector panel apparatus uninstalled, redesigned, and reinstalled. This requires a significant amount of furnace downtime. If the opening in the balcony panel is not large enough to allow the burner and/or injector panel apparatus to be reinstalled with the correct orientation, the opening in the balcony panel must be modified. This requires greater capital investment and a lengthier furnace downtime.

Thus, it is an object of the invention to provide sump burner and/or injector panel apparatuses whose orientation towards a target area within a furnace may be more easily modified without incurring undesirable amounts of furnace downtime, capital expense, or panel apparatus redesigns.

Various techniques have been designed for cooling panels that are used in EAFs. One type of cooling means is an empty cavity, the inside of which is sprayed with cooling water. Another type of cooling means is a serpentine conduit of cooling water that traverses from left to right and back along a plane that is typically oriented at a right angle to the slag layer. While these often achieve a fully satisfactory cooling effect, such bulky devices result in an overly large, heavy, and expensive panel body.

Thus, it is an object of the invention to provide an improved sump burner and/or injector panel apparatuses that are satisfactorily cooled without resulting in an overly large, heavy, and expensive panel body.

There is disclosed in accordance with the present invention a method of installing a burner and/or injector panel apparatus through a circular opening in a ceiling cooling panel of a metal melting furnace. The burner and/or injector panel apparatus comprises: a horizontally extending flange; a main body connected to an underside of said flange; and a burner and/or injector inserted in said main body chamber that is adapted and configured to inject therefrom at least one of a flame, a jet of oxygen, and a stream of carbon particles. The main body extends downwardly from said flange along a main body axis at an angle to a vertical axis of said flange. Said connected flange and main body have a centrally disposed chamber extending between upper and lower ends thereof. Said main body has a width or diameter sufficiently small enough to allow the main body to extend downwardly through the opening in the ceiling cooling panel. Said method comprises the following steps. Said main body is lowered through the circular opening in the ceiling cooling panel while said flange rests over the opening. A target area of a molten metal bath in the furnace is selected at which at least one of a flame, a jet of oxygen, and a stream of carbon particles is to be injected. Said connected flange and main body are rotated until the burner and/or injector points towards the target area.

There is also disclosed a method of treating metal that comprises the following steps. A burner and/or injector panel apparatus installed through a circular opening in a ceiling cooling panel of a metal melting furnace. The burner and/or injector panel apparatus comprises: a horizontally extending flange; a main body connected to an underside of said flange; and a burner and/or injector inserted in said main body chamber that is adapted and configured to inject therefrom at least one of a flame, a jet of oxygen, and a stream of carbon particles. The main body extends downwardly from said flange along a main body axis at an angle to a vertical axis of said flange. Said connected flange and main body have a centrally disposed chamber extending between upper and lower ends thereof. Said main body has a width or diameter sufficiently small enough to allow the main body to extend downwardly through the opening in the ceiling cooling panel. Said method comprises the following steps. Said main body is lowered through the circular opening in the ceiling cooling panel while said flange rests over the opening. A target area of a molten metal bath in the furnace is selected at which at least one of a flame, a jet of oxygen, and a stream of carbon particles is to be injected. Said connected flange and main body are rotated until the burner and/or injector points towards the target area. At least one of fuel and oxidant, oxygen, and carbon particles is injected from said burner and/or injector into a bath of molten metal in the furnace.

The method of installing may include any one or more of the following aspects:
- the pitch and/or roll angle of the flange with respect to the ceiling cooling panel are adjust by adjusting a clearance in between said flange and the ceiling cooling panel at one or more circumferential portions of said flange to more optimally point the burner and/or injector towards the target area; and a wedge is driven in between a top surface of the ceiling cooling panel and a bottom surface of said flange to maintain the pitch and/or roll angle.
- the burner and/or injector panel apparatus further comprises a mechanical device comprising:
   ▪ a horizontal plate having a width or diameter sufficiently large enough to allow said horizontal plate to rest on top of the ceiling cooling panel and having a vertical aperture aligned with the opening in the ceiling cooling panel, said vertical aperture being sufficiently large enough to allow said main body to extend downwardly through the vertical aperture and the opening in the ceiling cooling panel and being sufficiently small enough to prevent the flange from falling through said vertical aperture and the opening in the ceiling cooling panel;
   ▪ one or more fasteners, and
   ▪ one or more retaining clips corresponding to said one or more fasteners, wherein said plate further comprises one or more studs corresponding to said one or more retaining clips upwardly projecting from an upper surface of said plate, said clips being adapted and configured to be fastened to said studs with said fasteners so as to fixedly secure said flange between said plate and said one or more clips.
- the position of the connected main body and flange and the orientation of the burner and/or injector are fixed with respect to the ceiling cooling panel by placing said one or more retaining clips over a peripheral portion of an upper surface of said flange at positions corresponding to said studs and fastening said one or more retaining clips to said studs with said fasteners.
- the burner and/or injector panel apparatus further comprises a mechanical device comprising first and second lugs, a mounting bar, and first and second wedges, said mounting bar having a first slot extending through a body of the mounting bar at an end thereof and a second slot extending through the body of the mounting bar at an opposite end thereof, each of said slots having a size sufficiently large enough to allow travel of one of the lugs therethrough, each of said lugs having a pair of legs free at one end thereof and joined together at an opposite end thereof.
- said method comprises the further step of fixing the position of the connected main body and flange and the orientation of the burner and/or injector with respect to the ceiling cooling panel by:
   - before performing said step of lowering said main body, welding the free ends of the legs of said lugs to an upper surface of said ceiling cooling panel adjacent to the opening in the ceiling cooling panel;
   - performing said step of lowering said main body;
   - placing said mounting bar on top of said flange while aligning said slots with said lugs;
   - jamming said first wedge into a space in between a top surface of said mounting bar adjacent said first slot and a space underneath the joined portion of said first lug to frictionally retain the flange against the ceiling cooling panel; and
   - jamming said second wedge into a space in between the top surface of said mounting bar adjacent said second slot and a space underneath the joined portion of said second lug to frictionally retain the flange against the ceiling cooling panel, wherein said steps of jamming said first and second wedges fixes the position of the connected main body and flange and the orientation of the burner and/or injector with respect to the ceiling cooling panel;
- said main body is integrally formed with said flange through casting;
- at least one of a source of fuel and oxidant, a source of oxygen, and a source of carbon particles are connected to said burner and/or injector;
- the connected main body and flange includes a cooling circuit extending from said flange to a point adjacent the lower portion of the main body and returning back up to the flange, and said method comprises the further step of connecting the cooling circuit to a supply of cooling water;
- the furnace is an electric arc furnace having a hearth adapted and configured to contain a bath of molten metal, a sump region with a tap hole; sidewalls extending upwardly and around said hearth and sump region; and a balcony ceiling extending horizontally over said sump region, the ceiling cooling panel with the opening forming part of the balcony;
- the diameter or width of the main body adjacent the flange is sufficiently small enough to allow at least 180° of rotation of the main body inside the circular opening in the ceiling cooling panel;
- the diameter or width of the main body adjacent the flange is sufficiently small enough to allow the main body to be tiled inside the circular opening in the ceiling cooling panel;
- the furnace is an electric arc furnace and the ceiling cooling panel is a balcony panel in a sump area of the furnace;
- said main body is rotatable and tiltable inside the aperture;
- said main body has a circular cross-section;
- said main body has an elliptical cross-section;
- said flange has a circular cross-section;
- said burner and/or injector comprises a burner;
- said burner and/or injector comprises an oxygen injector;
- said burner and/or injector comprises a burner and an oxygen injector;
- said burner and/or injector comprises a carbon particle injector;
- said burner and/or injector comprises a burner and a carbon particle injector;
- said burner and/or injector comprises a burner, an oxygen injector, and a carbon particle injector;
- said burner and/or injector comprises a combined burner and oxygen injector;
- carbon particles are injected from said carbon particle injector into said molten metal bath;
- the method of installation further comprises the step of connecting at least one of a source of fuel and oxidant, a source of oxygen, and a source of carbon particles to said burner and/or injector.

For a further understanding of the nature and objects of the present invention, reference should be made to the following detailed description, taken in conjunction with the accompanying drawings, in which like elements are given the same or analogous reference numbers and wherein:
Figure 1 is a top plan view of an inventive furnace with a sump burner and/or injector panel apparatus.
Figure 2 is a perspective view of the furnace of Figure 1 with parts removed.
Figure 3 is a perspective view of one embodiment of the burner and/or injector panel apparatus of the present invention.
Figure 4 is a top plan view of the burner and/or injector panel apparatus of Figure 3 illustrating hidden parts.
Figure 5 is an elevation view of the burner and/or injector panel apparatus of Figure 3.
Figure 6 is a cross-sectional view of the burner and/or injector panel apparatus of Figure 3.
Figure 7 is a cross-sectional view of another embodiment of the burner and/or injector panel apparatus of the present invention.
Figure 8 is a top plan view of the burner and/or injector panel apparatus of Figure 7.
Figure 9 is a partial cross-sectional side elevation view, with portions broken away, of the ceiling cooling panel, lug, mounting plate, and flange of Figure 8 with a wedge installed in between a top surface of the mounting plate and a bottom surface of the joined portion of the lug.

The words and phrases used herein should be given their ordinary and customary meaning in the art by one skilled in the art unless otherwise further defined.

In the following, reference is made to embodiments of the invention. However, it should be understood that the invention is not limited to specific described embodiments. Instead, any combination of the following features and elements, whether related to different embodiments or not, is contemplated to implement and practice the invention. Furthermore, in various embodiments the invention provides numerous advantages over the prior art. However, although embodiments of the invention may achieve advantages over other possible solutions and/or over the prior art, whether or not a particular advantage is achieved by a given embodiment is not limiting of the invention. Thus, the following aspects, features, embodiments and advantages are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

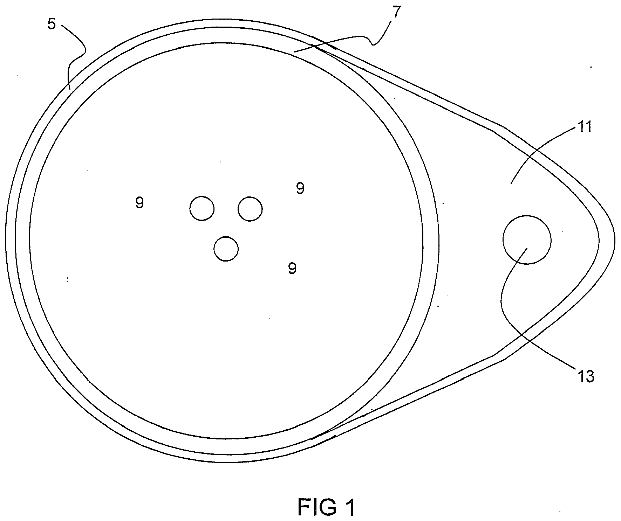

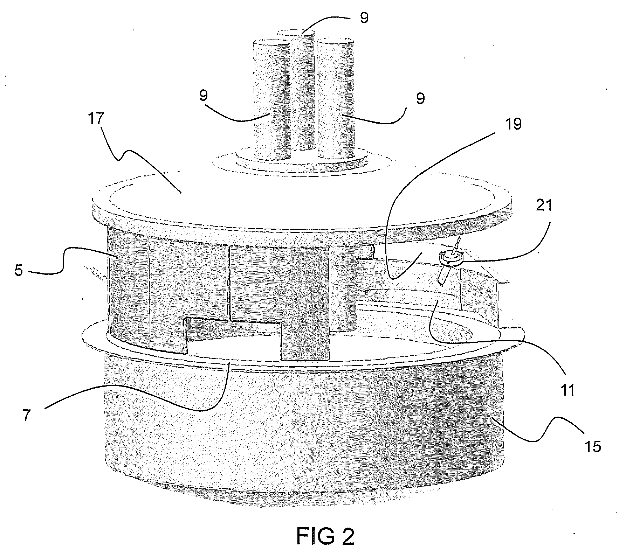

As best illustrated in Figure 1-2, an electric arc furnace (EAF) according to the invention includes a hearth 7 of ceramic material lining a lower shell 15 of metal. The hearth 7 is configured and adapted to contain a molten bath of metal. Disposed above the lower shell 15 is an upper shell comprising sidewalls 5 that extend upwardly from adjacent a peripheral portion of the hearth 7. Extending across top portions of sidewalls 5 is a retractable roof 17. Three electrodes 9 extend through roof 17 and into the molten bath. A sump area 11 is lined with refractory material and includes a tapping hole 13. The sump area 11 is typically crescent-shaped. A lower portion of the sidewalls 5 adjacent a peripheral edge of the sump area 11 do not extend as high as other portions of the sidewalls 5 not adjacent the sump area 11. Rather, they extend only partially upward to meet at a peripheral arcuate edge of balcony panel 19. The balcony panel 19 provides a ceiling over the sump area 11. An upper portion of sidewalls 5 adjacent the sump area 11 extends from the arcuate edge of balcony panel 19 closest to the hearth 7 upwardly towards roof 17.

A circular opening is formed in the balcony panel 19 (i.e., the ceiling cooling panel) for accommodating a burner and/or injector panel apparatus 21. The burner and/or injector panel apparatus 21 may be positioned and oriented in such a way as to direct a flame towards scrap or charge in the sump area 11 or towards the metal bath adjacent the sump area 11. The burner and/or injector panel apparatus 21 may be positioned and oriented in such a way as to direct a flame of fuel and oxidant or inject oxygen and/or carbon particles into a desired target area of the molten metal bath adjacent the sump area 11 by rotating and/or tilting the burner and/or injector panel apparatus 21 in the circular opening of the balcony panel.

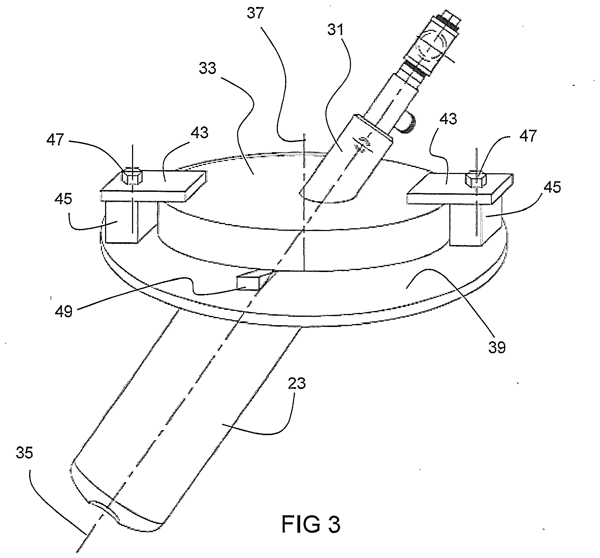

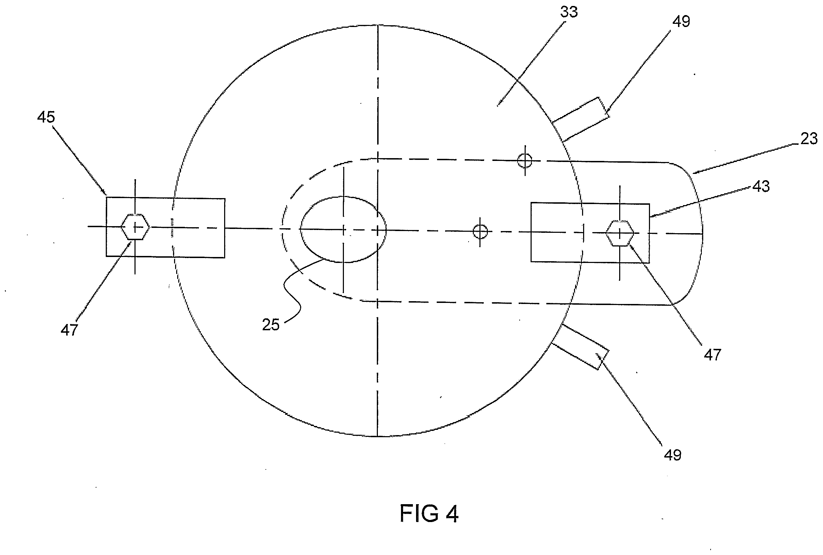

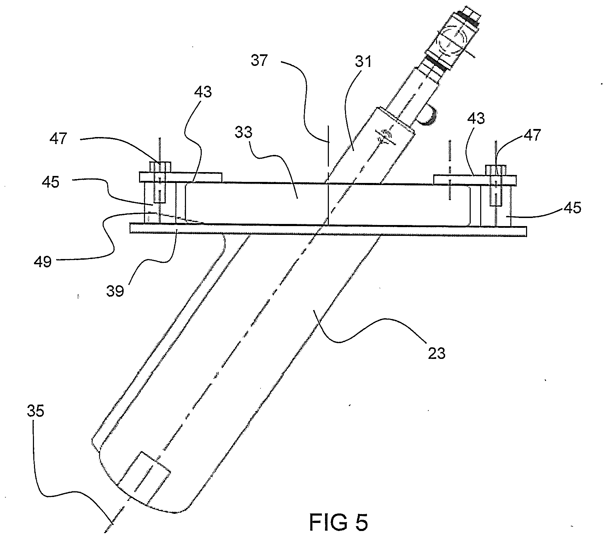

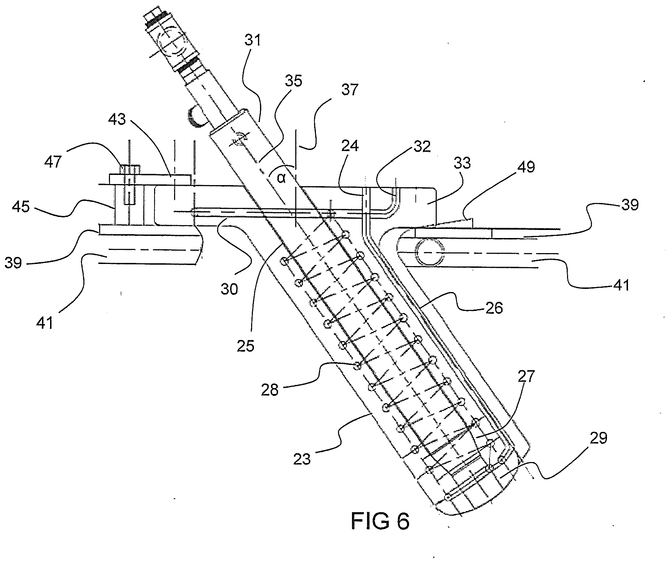

As best illustrated in Figures 3-6, the burner and/or injector panel apparatus 21 includes a flange 33 disposed at an upper end thereof that is connected to a main body 23 disposed at a lower end thereof. Typically, the flange 33 and the main body are integrally formed through casting. An axis 37 of the flange 33 forms an angle α with an axis 35 of body 23. Extending through the flange 33 and the body 23 along the axis 35 is a chamber 25. While the chamber 25 may have any cross-sectional configuration, typically it is cylindrical as illustrated in Figure 6 and the cross-sectional configuration does not change along the length of the chamber 25.

The flange 33 rests upon a plate 39. Plate 39 includes an aperture that is sized to correspond to an opening in water-cooled panel 41. The aperture in the plate 39 is also sized sufficiently small enough to prevent the flange 33 from falling through the aperture and into the furnace and sufficiently large enough to allow the main body to extend below the panel 41 while the flange 33 rests atop the plate 39.

Plate 39 also includes one or more upwardly projecting studs 45 and one or more corresponding retaining clips 43 secured to studs 45 with one or more corresponding fasteners 47. The plate 39, projecting stud(s) 45 and retaining clip(s) 43 may be made of any metal or metal alloy suitable for metal melting furnaces.

Alternatively, instead of studs 45, clips 43, and fasteners 47, the flange 33 could be provided with curved slots in a circumferential portion thereof. Accessible through the curved slots could be holes threaded in the plate 39. One or more bolts could be inserted into one or more slots and threaded into the corresponding hole in plate 39. Tightening the bolt would allow the flange 33 to be rigidly secured to the plate 39.

The flange 33 and main body 23 also includes a cooling circuit. The cooling circuit may have any configuration suitable to provide sufficient cooling to the main body. Indeed, one of ordinary skill in the art will recognize that its dimensions may be designed according to an anticipated thermal load upon the main body 23 during operation in the EAF. The cooling circuit has an inlet 24, a downward leg 26 which leads to a helical portion 28 formed in a circumferential portion of body 23 around the chamber 25. A terminal end of the helical portion 28 leads to a return leg 30 which in turn leads to an outlet 32. Alternatively, the cooling circuit may have an inlet 24, a downward leg 26 fluidly connected to return leg 30 leading to an outlet 32, but in this case, the downward and return legs 26, 30 are not connected by a helical portion 28. Rather, the helical portion 28 is replaced with an upward leg (not illustrated) extending down from the return leg 30 and the upward leg is fluidly connected to the downward leg 26 by a transverse portion of the cooling circuit.

In the embodiment of Figures 3-6, because the main body 23 projects downwardly at an angle α, the diameter of the circular aperture of the plate 39 is made large enough to allow the flange 33 and main body 23 to be rotated at least 90°, typically at least 180°, and ideally 360° without the main body 23 impinging upon an inner surface of the opening in the water-cooled furnace panel 41.

The diameter of the cylindrical aperture of the plate 39 is also large enough to allow a clearance adjustment device to tip the flange 33 and main body 23 to its side, again without the main body 23 impinging upon an inner surface of the opening in the water-cooled panel. The clearance adjustment device may be a wedge 49 or any other known lever that is inserted in between flange 33 and plate 39 at any point of the circumference of the flange 33. The clearance adjustment device could also be one or more bolts that threadedly engage the flange 33 at a circumferential portion thereof and which bear against the upper surface of the plate 39. As such bolts are threaded into or out of the flange 33, the lower ends force the flange 33 away or towards from the plate 39 and thus increase or decrease the clearance at that point. Any number of these threaded bolts could be used to increase or decrease the clearance at any number of points in between the flange 33 and plate 39.

The diameter of flange 33 is greater than the diameter of the cylindrical aperture formed in plate 39 and the opening in the water-cooled furnace panel through which the apparatus 21 is installed. This difference in diameters allows the main body 23 to be rotated without impinging upon a surface of the panel 141. The angular orientation of the main body 23 and flange 33 may be fixed by tightening fastener(s) 47 to compress the flange 33 in between clip(s) 43 and plate 39.

One of ordinary skill in the art will recognize that the circumferential surface of flange 33 may be shaped in a wide variety of configurations. For example, while the flange 33 may still have a constant height, it may instead be configured to have multiple lobes projecting outward from the center and rotated so that one or more of the lobes are retained in between the clip(s) 43 and plate 39.

The cooling circuit may be formed in the main body 23 and flange 33 in one of two ways.

First, a middle portion of a metal or metal alloy pipe (such as copper or copper alloy) is formed into the desired shape including the downward leg 26, return leg 30, and either the helical coil shape or the curved transverse portion (not illustrated) and upward leg (not illustrated) connecting the downward leg 26 to the return leg 30. The helically-coiled or otherwise-shaped pipe is inserted into and fixed to the inside of a casting form for shaping the inner body 23 and flange 33. Molten metal is poured into the casting form. After cooling, the inlet 24 and outlet 32 are formed in the surface of the cast piece in a known manner.

Second, a helically-shaped sand core or otherwise-shaped sand core of casting sand and binder is molded. The sand core is then inserted into and fixed to the inside of a casting form for shaping the inner body 23 and flange 33. Molten metal is poured into the casting form. After cooling, the casting sand is removed from the thus-shaped helical cooling circuit and the inlet 24 and outlet 32 are formed in the surface of the cast piece in a known manner.

The apparatus 21 may be installed as follows.

If not existing already, a circular opening is made in horizontal water-cooled panel 41. Plate 39 is placed over the opening in wall 41. Plate 39 is positioned to coaxially align the opening in panel 41 with the cylindrical aperture in plate 39. Plate 39 is secured to panel 41 with any means known in the art, such as, for example, with refractory plastic. The main body 23 portion of the connected main body 23 and flange 33 (with the burner and/or injector 31 already inserted into chamber 25) is extended down through the opening in panel 41 and cylindrical aperture in plate 39 with the axis 35 directed towards a desired target area for a flame or injection of a stream of oxygen or carbon particles from burner and/or injector 31. The connected main body 23 and flange 33 is then positioned to coaxially align flange 33 with the cylindrical aperture in plate 39 and the opening in the panel 41. Retaining clip(s) 43 is placed in overlapping relationship with flange 33 and fastener(s) 47 is tightened to securely hold flange 33 in between retaining clip(s) 43 and plate 39. If desired, a clearance adjustment device as described above may be utilized to adjust the clearance between the plate 39 and flange 33 in order to tip the integrally-formed main body 23 and flange 33 to desired pitch and roll angles. The burner and/or injector 31 is connected, as appropriate, to valve trains for fuel and oxidant (such as oxygen, air or both oxygen and air), a valve train for oxygen, and/or to a supply of carbon particles. Finally, a source of coolant (typically water) is connected to inlet 32.

If may become apparent that, after installation, the flame, jet of oxygen, and/or stream of carbon particles is not satisfactorily directed towards the desired target area of the bath of molten metal. In that case, the apparatus 21 may be adjusted in either or both of two ways in order to achieve the desired direction. The fastener(s) 47 is loosened in order to release the grip of the retaining clip(s) 43 and plate 39 on the flange 33. The wedge 49 may be driven in between the plate 39 and the flange 33 in order to tilt the apparatus 21 from the horizontal plane of the water-cooled panel 41. The farther the wedge 49 is driven in between the plate 39 and flange 33, the greater the amount of tiling will be achieved. The main body 23 and flange 33 may also be rotated about axis 37 anywhere from 0° to 360°. Between the wedging and rotation, the desired area of the molten bath of metal may be properly targeted by the flame, jet of oxygen, and/or stream of carbon particles. Once the desired direction and targeting is achieved, the fastener(s) is tightened in order to once again secure the position of the flange 33 and main body 23 with respect to the plate 39 and water-cooled panel 41.

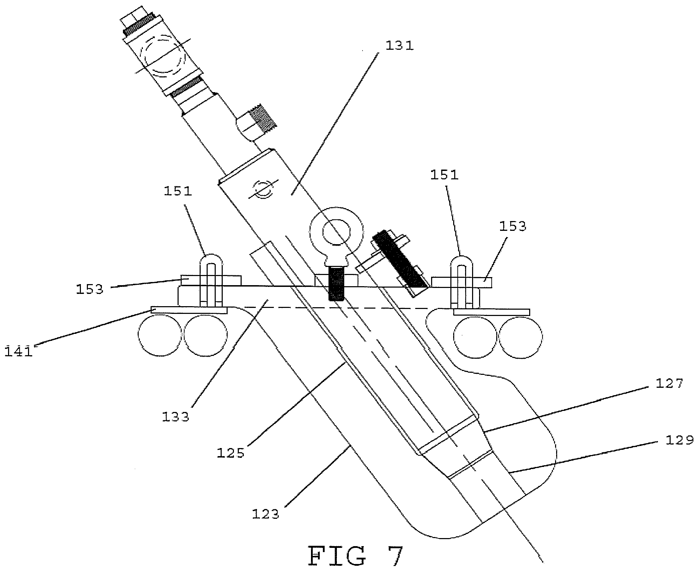

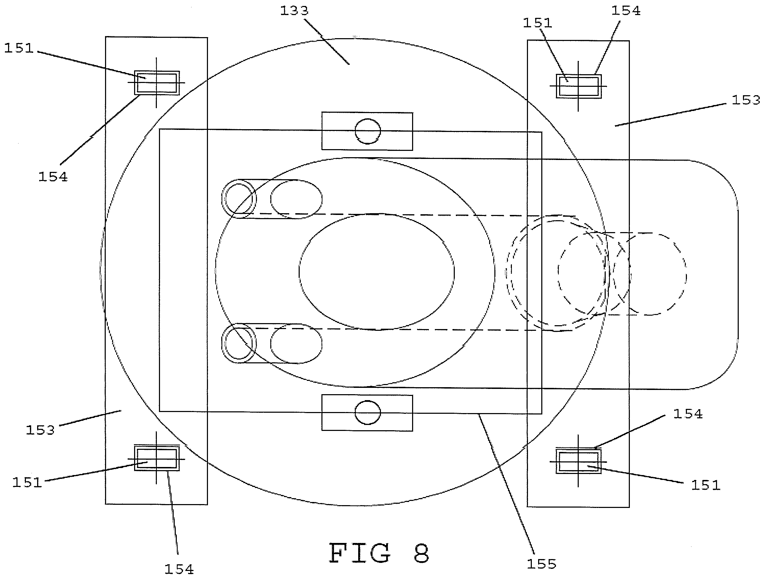

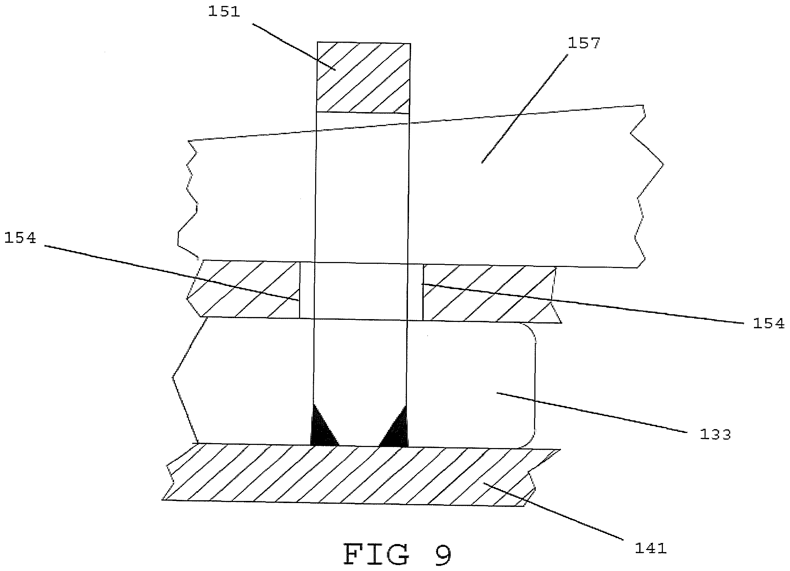

As best illustrated in Figures 7-9, the burner and/or injector panel apparatus 21 includes a flange 133 disposed at an upper end thereof that is connected to a main body 123 disposed at a lower end thereof. Typically, the flange 133 and the main body 123 are integrally formed through casting. An axis of the flange 133 forms an angle α with an axis of body 123. Extending through the flange 133 and the body 123 along the body axis is a chamber 125. While the chamber 125 may have any cross-sectional configuration, typically it is cylindrical as illustrated in Figure 7 and the cross-sectional configuration does not change along the length of the chamber 125.

The flange 133 rests upon the water-cooled panel 141. The water-cooled panel 141 includes a circular opening that is sized to correspond to the width or diameter of the main body 123. The circular opening in the panel 141 is also sized sufficiently small enough to prevent the flange 133 from falling through the circular opening and into the furnace. The circular opening is also sized sufficiently large enough to allow the main body 123 to extend below the panel 141 while the flange 133 rests atop the panel 141.

The angular position of the connected flange 133 and main body 123 with respect to the panel 141 may be mechanically fixed. Two pairs of lugs 151 are provided, each one of which has two legs that are free at one end of the lug 151 and which are joined at another end of the lug 151. The free ends of the legs are welded or otherwise securely fixed to an upper surface of the panel 141. Two mounting bars 153 are placed on either side of the circular opening on top of an upper surface of the flange 133. The lugs 151 are positioned to allow slots 154 formed at each end of the mounting bars 153 to align with the lugs 151. The slots 154 are sized sufficiently large enough to allow the lugs 151 to project upwardly through the slots 154 while the mounting bars 153 to rest upon the flange 133. Four wedges 157 are used to frictionally retain the flange 133 in between the panel 141 and the mounting bars 153. Each wedge 157 is jammed into a space in between a top surface of a mounting bar 153 adjacent a slot and a space underneath the joined portion of a lug 151.

The mounting bars 153 and lugs 151 may be made of any metal or metal alloy suitable for metal melting furnaces.

While not illustrated, the flange 133 and main body 123 also includes a cooling circuit. The cooling circuit may have any configuration suitable to provide sufficient cooling to the main body. Indeed, one of ordinary skill in the art will recognize that its dimensions may be designed according to an anticipated thermal load upon the main body 123 during operation in the EAF. The cooling circuit has an inlet formed in the flange 133 that leads to a downward leg extending to the lower end of the main body 123. A transverse portion of the cooling circuit extends transversely across a lower portion of the main body 123. An upward leg, extending parallel to the downward leg, connects the transverse section with an outlet formed in the flange 133.

The diameter of the circular opening in the panel 141 is made large enough to allow the main body 123 to be rotated at least 90°, more typically at least 180°, and ideally 360° without the main body 123 impinging upon an inner surface of the circular opening in the water-cooled furnace panel 141.

The diameter of the circular opening in the panel 141 is also large enough to allow a clearance adjustment device to tip the flange 133 and main body 123 to its side, again without the main body 123 impinging upon an inner surface of the opening in the panel 141. The clearance adjustment device may be a wedge or any other known lever that is inserted in between flange 133 and panel 141 at any point of the circumference of the flange 133. The clearance adjustment device could also be one or more bolts that threadedly engage the flange 133 at a circumferential portion thereof and which bear against the upper surface of the panel 141. As such bolts are threaded into or out of the flange 133, the lower ends force the flange 133 away or towards from the panel 141 and thus increase or decrease the clearance at that point. Any number of these threaded bolts could be used to increase or decrease the clearance at any number of points in between the flange 133 and panel 141.

The diameter of flange 133 is greater than the diameter of the circular opening formed in panel 141. This difference in diameters allows the flange 133 to be rotated within the circular opening without falling into the furnace.

One of ordinary skill in the art will recognize that the circumferential surface of flange 133 may be shaped in a wide variety of configurations. For example, while the flange 133 may still have a constant height, it may instead be configured to have multiple lobes projecting outward from the center and rotated so that one or more of the lobes are retained in between the mounting bars 153 and panel 141.

The cooling circuit may be formed in the main body 123 and flange 133 in one of two ways.

First, a middle portion of a metal or metal alloy pipe (such as copper or copper alloy) is formed into the desired shape including the downward leg, upward leg and the transverse portion connecting the downward and upward legs. The thus-formed pipe is inserted into and fixed to the inside of a casting form for shaping the inner body 123 and flange 133. Molten metal is poured into the casting form. After cooling, the inlet and outlet are formed in the surface of the cast piece in a known manner.

Second, a sand core of casting sand and binder is molded into the desired shape of the cooling circuit. The sand core is then inserted into and fixed to the inside of a casting form for shaping the inner body 123 and flange 133. Molten metal is poured into the casting form. After cooling, the casting sand is removed from the thus-shaped helical cooling circuit and the inlet and outlet are formed in the surface of the cast piece in a known manner.

The apparatus 21 according to Figures 7-9 may be installed as follows.

A circular opening may be made in a water-cooled panel 141 of the balcony panel 19 according to the following steps. Cooling water is drained out of the cooling circuit inside the panel 141. A circular opening is cut into the interior and exterior surfaces of the panel 141. Sections of pipes are cut away from the cooling circuit exposed by the circular openings cut into the interior and exterior surfaces. The flow of cooling water through the pipes is re-routed around the cut-away section by welding curved pipes that extend around a circumferential portion of the cut-away section.

Two pairs of lugs 151 are welded to an upper surface of the panel 141 at locations corresponding to positions of the slots 154 of the mounting bars 153 when later installed. The main body 123 portion of the connected main body 123 and flange 133 is extended down through the circular opening in panel 141 with the axis of the burner and/or injector 131 directed towards a desired target area for a flame or injection of a stream of oxygen or carbon particles. The mounting bars 153 are positioned to align the slots 154 over the lugs 151 and to position middle portions of the bars 153 over the flange 133. If desired, a clearance adjustment device as described above may be utilized to adjust the clearance between the panel 151 and flange 133 in order to tip the integrally-formed main body 123 and flange 133 to desired pitch and roll angles. Next, wedges 157 are jammed/driven into the space in between the mounting bars 153 and the joined sections of the lugs 151 as described above. Finally, the burner and/or injector 31 is connected, as appropriate, to valve trains for fuel and oxidant (such as oxygen, air or both oxygen and air), a valve train for oxygen, and/or to a supply of carbon particles. Finally, a source of coolant (typically water) is connected to the inlet of the cooling circuit.

If may become apparent that, after installation, the flame, jet of oxygen, and/or stream of carbon particles is not satisfactorily directed towards the desired target area of the bath of molten metal. In that case, the apparatus 21 may be adjusted in either or both of two ways in order to achieve the desired direction. The wedges 157 are removed in order to release the flange 133 in between the mounting bars 153 and the panel 141. A different wedge may be driven in between the flange 133 and the panel 141 in order to tilt the apparatus 21 from the horizontal plane of the panel 141. The farther this wedge is driven in between the panel 141 and the flange 133, the greater the amount of tiling will be achieved. The main body 123 and flange 133 may also be rotated about the axis of the circular opening in the panel 141 anywhere from 0° to 360°. Between the wedging and rotation, the desired area of the molten bath of metal may be properly targeted by the flame, jet of oxygen, and/or stream of carbon particles. Once the desired direction and targeting is achieved, the flange 133 is once again secured between the panel 141 and mounting bars 153 as described above.

With respect to either of the embodiments of Figures 1-6 or of Figures 7-9, the water-cooled flange 33, 133 and main body 23, 123 may be formed of any metal or metal alloy suitable for use in metal-melting furnaces, especially EAFs. Typically, it is made of copper or copper alloy. Typically, they are integrally formed through casting. The under surface of flange 133 exposed to furnaces gases is typically covered with a soft refractory material.

In the case of a cylindrical chamber 25, 125, it may have a constant diameter from its upper end to its lower end. Typically, it has a larger inside diameter over most of the length of the main body 23, 123 and tapers inwardly at an intermediate section 27, 127 from the larger inside diameter to a smaller inside diameter to terminate at a terminal section 29, 129. Inserted into the cylindrical chamber 25, 125 is a burner and/or injector body 31, 131.

Each of the main body 23 and the aperture in the plate 39 or the circular opening in the water-cooled panel 141 may be of any configuration so long as the main body 23, 123 may be rotated and tilted inside the aperture or circular opening, as the case may be. Typically, they are both cylindrical where the aperture or opening has a diameter slightly larger than that of the main body 23, 123 to accommodate tilting

As mentioned above, the main body 23, 123 may be configured in a wide variety of shapes so long as it is rotatable and tiltable while inserted in the aperture in the plate 39 or in the circular opening in the water-cooled panel 141. Typically, at least a portion of the main body 23, 123 has a circular cross-section. As best illustrated in Figures 7-9, the cylindrically configured portion extends through the cylindrical chamber 125 and transitions to a non-cylindrical cross-section such as an elliptical cross-section. The non-cylindrical cross-section is useful for allowing sufficient space for the transverse portion of the cooling circuit between the upward leg and the downward leg (not illustrated in Figures 7-9).

The burner and/or injector body 31, 131 may be configured and adapted in a number of different ways: as a burner, as an injector, or as a combined burner/injector. One of ordinary skill in the art will recognize that various types of burners, injectors, and burner/injectors are known in the art and that the burner and/or injector 31, 131 may be any of those well known structures. The burner is generally configured and adapted to inject fuel (such as natural gas, propane, or fuel oil) and an oxidant (such as air, oxygen, or air and oxygen) for combustion thereof. One type of burner/injector is generally configured and adapted to inject fuel and an oxidant or combustion thereof as well as a supersonic jet of oxygen. Another type of burner/injector is generally configured and adapted to inject fuel and an oxidant for combustion thereof as well as a stream of carbon particles. Still another type of burner/injector is generally configured and adapted to inject fuel and an oxidant for combustion thereof as well as a supersonic jet of oxygen and a stream of carbon particles. The injector may be an oxygen lance or a nozzle adapted and configured to inject a stream of carbon particles. Typical examples of burners or burner/injectors are those described by US 5,599,375, US 4,622,007, US 5,788,921, and US 5,858,302. Typical commercial examples of burners, burner/injectors, and injectors include the Pyretron™ Burner, the PyrOx Burner, and the PyreJet™ Burner or AlarcJet Nozzle available from ACI located in Kennesaw, Georgia, USA. The burner, burner/injector, or injector may be made of any metal or metal alloy and may or may not be made of the same material as the flange 33 and main body 23.

The flange 33, 133 is adapted and configured to allow up to at least 90°, typically at least 180°, and more typically 360°, of rotation on top of ceiling cooling panel 141 or plate 39. While the flange 33, 133 may be configured in a wide variety of shapes, typically it is cylindrical so as to allow easily rotatability throughout the 360° range while maintaining a substantially uniform distance in between a circumferential surface thereof and the projecting stud(s) 45 or lugs 151.

In the embodiment of Figures 7-9, because the main body 123 projects downwardly at an angle α, the diameter of the circular opening in the water-cooled furnace panel 141 is made large enough to allow the flange 133 and main body 123 to be rotated 360° without the main body 123 impinging upon an inner surface of the opening in the water-cooled furnace panel 141.

One of ordinary skill in the art will recognize how the apparatus 21 is operated. In a burner, flows of fuel (such as natural gas or fuel oil) and oxidant (such as oxygen, air, or both oxygen and air) are injected out the end of the terminal portion 29, 129 and combust inside the furnace. In an oxygen injector (in other words, an oxygen lance), a jet of oxygen is injected out the end of the terminal portion 29, 129 and penetrates the molten bath of metal. In the case of an EAF, the oxygen jet penetrates through the slag layer. In a carbon injector, a fluidized stream of carbon particles is injected out the end of the terminal portion 29, 129 and penetrates the bath of molten metal, and if a layer of slag is present, penetrates through the layer of slag into the molten metal. Those skilled in the art will further understand how apparatus 21 will operate when a combination of burner and oxygen injector, burner and carbon particle injector, or burner, oxygen injector, and carbon particle injector is selected.

The present invention yields several advantages. First, because the end of the main body 23, 123 projects relatively far from the water-cooled panel 41, 141, the flame, jet of oxygen, and/or stream of carbon particles is more coherent. In the case of an oxygen jet or stream of carbon particles, they are better able to penetrate into and through the slag or molten bath of metal. Many conventional devices have ends that are flush with the water-cooled panel 41, 141 thereby sacrificing potential coherent reach of the flame, jet of oxygen, or stream of carbon particles. Second, in the embodiment of Figures 1-6 where the cooling circuit has a helically coiled portion, the burner and/or injector 31 is better cooled because the cooling circuit extends 360° around the cylindrical chamber 25 instead of traversing only on one side thereof in a serpentine manner like conventional burner/injector panels. Third, when the main body 23, 123 has a cylindrical or similar configuration, either in whole or part, the apparatus 21 absorbs less heat from the furnace because of the optimized surface to volume ratio afforded by a cylinder. Fourth, the apparatus 21 yields the ability to heat or inject oxygen or carbon particles into practically any spot within the reach of the flame, jet of oxygen, or stream of carbon particles. This is due to its ability to be tilted and/or rotated. Conventional burner and/or injectors have a fixed position once they are installed at the water-cooled panel. This fixed position is not alterable unless the opening in the water-cooled panel (through which the conventional burner and/or injector extends) is significantly modified or the burner and/or injector panel is completely redesigned to orient the burner and/or injector in a different direction. This is because the square or rectangular configuration of the panel does not allow rotation within the square or rectangular opening in the water-cooled panel. Preferred processes and apparatus for practicing the present invention have been described.

## Claims

1. A method of installing a burner and/or injector panel apparatus (21) through a circular opening in a ceiling cooling panel (41, 141) of a metal melting furnace, the burner and/or injector panel apparatus (21) comprising:
- a horizontally extending flange(33, 133) ;
- a main body (23, 123) connected to an underside of said flange (33, 133), said main body (23, 123) extending downwardly from said flange (33, 133) along a main body axis (35) at an angle to a vertical axis (37) of said flange (33, 133), said connected flange (33, 133) and main body (23, 123) having a centrally disposed chamber (25, 125) extending between upper and lower ends thereof, said main body (23, 123) having a width or diameter sufficiently small enough to allow the main body (23, 123) to extend downwardly through the opening in the ceiling cooling panel (41, 141), and
- a burner and/or injector (31, 131) inserted in said main body chamber (25, 125) that is adapted and configured to inject therefrom at least one of a flame, a jet of oxygen, and a stream of carbon particles;
said method comprises the steps of:
- lowering said main body (23, 123) through the circular opening in the ceiling cooling panel (41, 141) while said flange (33, 133) rests over the opening;
- selecting a target area of a molten metal bath in the furnace and at which at least one of a flame, a jet of oxygen, and a stream of carbon particles is to be injected; and
- rotating said connected flange (33, 133) and main body until the burner and/or injector points towards the target area.

2. The method of installing of claim 1, further comprising the steps of:
- adjusting the pitch and/or roll angle of the flange (33, 133) with respect to the ceiling cooling panel (41, 141) by adjusting a clearance in between said flange (33, 133) and the ceiling cooling panel (41, 141) at one or more circumferential portions of said flange (33, 133) to more optimally point the burner and/or injector (31, 131) towards the target area; and
- driving a wedge (49) in between a top surface of the ceiling cooling panel (41) and a bottom surface of said flange (33, 133) to maintain the pitch and/or roll angle.

3. The method of installing of claims 1 or 2, wherein:
the burner and/or injector panel apparatus (21) further comprises a mechanical device comprising:
- a horizontal plate (39) having a width or diameter sufficiently large enough to allow said horizontal plate to rest on top of the ceiling cooling panel (41, 141) and having a vertical aperture aligned with the opening in the ceiling cooling panel (41, 141), said vertical aperture being sufficiently large enough to allow said main body (23, 123) to extend downwardly through the vertical aperture and the opening in the ceiling cooling panel (41, 141) and being sufficiently small enough to prevent the flange (33, 133) from falling through said vertical aperture and the opening in the ceiling cooling panel (41, 141);
- one or more fasteners (47), and
- one or more retaining clips corresponding to said one or more fasteners (47), wherein said plate further comprises one or more studs (45) corresponding to said one or more retaining clips (43) upwardly projecting from an upper surface of said plate (39), said clips (43) being adapted and configured to be fastened to said studs (45) with said fasteners so as to fixedly secure said flange (33, 133) between said plate (39) and said one or more clips (43),
said method comprising the further step of fixing the position of the connected main body (23, 123) and flange (33, 133) and the orientation of the burner and/or injector (31, 131) with respect to the ceiling cooling panel (41, 141) by placing said one or more retaining clips (43) over a peripheral portion of an upper surface of said flange (33, 133) at positions corresponding to said studs (45), and fastening said one or more retaining clips (43) to said studs (45) with said fasteners (47).

4. The method of installing of claims 1 or 2, wherein:
the burner and/or injector panel apparatus (21) further comprises a mechanical device comprising first and second lugs (151), a mounting bar (153), and first and second wedges (157), said mounting bar (153) having a first slot extending through a body of the mounting bar at an end thereof and a second slot (154) extending through the body of the mounting bar at an opposite end thereof, each of said slots (154) having a size sufficiently large enough to allow travel of one of the lugs (151) therethrough, each of said lugs (151) having a pair of legs free at one end thereof and joined together at an opposite end thereof; and
said method comprises the further step of fixing the position of the connected main body and flange and the orientation of the burner and/or injector (131) with respect to the ceiling cooling panel (141) by:
- before performing said step of lowering said main body (123), welding the free ends of the legs of said lugs (151) to an upper surface of said ceiling cooling panel (141) adjacent to the opening in the ceiling cooling panel;
- performing said step of lowering said main body (123);
- placing said mounting bar (153) on top of said flange (133) while aligning said slots (154) with said lugs (151);
- jamming said first wedge into a space in between a top surface of said mounting bar (153) adjacent said first slot and a space underneath the joined portion of said first lug to frictionally retain the flange (133) against the ceiling cooling panel (141); and
- jamming said second wedge into a space in between the top surface of said mounting bar (153) adjacent said second slot and a space underneath the joined portion of said second lug to frictionally retain the flange (133) against the ceiling cooling panel (141), wherein said steps of jamming said first and second wedges fixes the position of the connected main body (123) and flange (133) and the orientation of the burner and/or injector (131) with respect to the ceiling cooling panel (141).

5. The method of installing of any of claims 1 to 4, wherein said main body (23, 123) is integrally formed with said flange (33, 133) through casting.

6. The method of installing of any of claims 1 to 5, further comprising the step of connecting at least one of a source of fuel and oxidant, a source of oxygen, and a source of carbon particles to said burner and/or injector (31).

7. The method of installing of any of claims 1 to 6, wherein:
the connected main body (23, 123) and flange (33, 133) includes a cooling circuit extending from said flange (33, 133) to a point adjacent the lower portion of the main body (23, 123) and returning back up to the flange (33, 133), and
said method comprises the further step of connecting the cooling circuit to a supply of cooling water.

8. The method of installing of any of claims 1 to 7, wherein the furnace is an electric arc furnace having a hearth (7) adapted and configured to contain a bath of molten metal, a sump region (11) with a tap hole (13); sidewalls extending upwardly and around said hearth (7) and sump region (11); and a balcony ceiling extending horizontally over said sump region (11), the ceiling cooling panel (41, 141) with the opening forming part of the balcony ceiling.

9. The method of installing of any of claims 1 to 8, wherein the diameter or width of the main body (23, 123) adjacent the flange (33, 133) is sufficiently small enough to allow at least 180° of rotation of the main body (23, 123) inside the circular opening in the ceiling cooling panel (41, 141).

10. The method of installing of any of claims 1 to 9, wherein the diameter or width of the main body (23, 123) adjacent the flange (33, 133) is sufficiently small enough to allow the main body to be tiled inside the circular opening in the ceiling cooling panel (41, 141).

11. The method of installing of any of claims 1 to 10, further including the step of connecting at least one of a source of fuel and oxidant, a source of oxygen, and a source of carbon particles to said burner and/or injector (31, 131).

12. A method of treating metal, comprising the steps of:
- performing the method of any of claims 1 to 11; and
- injecting at least one of fuel and oxidant, oxygen, and carbon particles from said burner and/or injector (31, 131) into a bath of molten metal in the furnace.

13. The method of claim 12, wherein the furnace is an electric arc furnace and the ceiling cooling panel (41, 141) is a balcony panel (19) in a sump area (11) of the furnace.

## Patentansprüche

1. Verfahren zur Installation einer Brenner- und/oder Einspritzdüsenfeld-Einrichtung (21) durch eine kreisförmige Öffnung in einem oberen Kühlungsfeld (41, 141) eines Metallschmelzofens, wobei die Brenner- und/oder Einspritzdüsenfeld-Einrichtung (21) Folgendes umfasst:
- einen sich horizontal erstreckenden Flansch (33, 133);
- einen Hauptkörper (23, 123), der an einer Unterseite des Flansches (33, 133) angeschlossen ist, wobei sich der Hauptkörper (23, 123) nach unten vom Flansch (33, 133) weg entlang einer Hauptkörperachse (35) in einem Winkel zu einer vertikalen Achse (37) des Flansches (33, 133) erstreckt, wobei der angeschlossene Flansch (33, 133) und Hauptkörper (23, 123) eine zentral angeordnete Kammer (25, 125) aufweisen, die sich zwischen oberen und unteren Enden von diesen erstreckt, wobei der Hauptkörper (23, 123) eine Breite oder einen Durchmesser aufweist, die/der ausreichend klein ist, um es dem Hauptkörper (23, 123) zu ermöglichen, sich nach unten durch die Öffnung in das obere Kühlungsfeld (41, 141) zu erstrecken, und
- einen Brenner und/oder eine Einspritzdüse (31, 131), die in der Hauptkörperkammer (25, 125) eingesetzt ist, welche derart angepasst und konfiguriert ist, um von dieser zumindest eine Flamme, einen Strahl Sauerstoff und einen Kohlenstoffpartikelstrom einzuspritzen;
wobei das Verfahren die folgenden Schritte umfasst:
- Absenken des Hauptkörpers (23, 123) durch die kreisförmige Öffnung in das obere Kühlungsfeld (41, 141), während der Flansch (33, 133) auf der Öffnung aufsitzt;
- Auswählen eines Zielbereichs eines geschmolzenen Schmelzbads in dem Ofen, und in den zumindest eine Flamme, ein Strahl Sauerstoff und ein Kohlenstoffpartikelstrom eingespritzt werden soll; und
- Rotieren des angeschlossenen Flansches (33, 133) und Hauptkörpers, bis der Brenner und/oder die Einspritzdüse zum Zielbereich hin ausgerichtet ist.

2. Verfahren zur Installation nach Anspruch 1, ferner umfassend die folgenden Schritte:
- Einstellen der Neigung und/oder des Rollwinkels des Flansches (33, 133) bezüglich des oberen Kühlungsfelds (41, 141) durch Einstellen eines Spielraums zwischen dem Flansch (33, 133) und dem oberen Kühlungsfeld (41, 141) an einem oder mehreren umfangsseitigen Abschnitten des Flansches (33, 133), um den Brenner und/oder die Einspritzdüse (31, 131) optimaler zum Zielbereich hin auszurichten; und
- Treiben eines Keils (49) zwischen einer oberen Fläche des oberen Kühlungsfelds (41) und einer unteren Fläche des Flansches (33, 133), um die Neigung und/oder den Rollwinkel aufrechtzuerhalten.

3. Verfahren zur Installation nach Anspruch 1 oder 2, wobei:
die Brenner- und/oder Einspritzdüsenfeld-Einrichtung (21) ferner eine mechanische Einrichtung umfasst, die Folgendes umfasst:
- eine horizontale Platte (39) mit einer Breite oder einem Durchmesser, der ausreichend groß ist, um es der horizontalen Platte zu ermöglichen, auf der Oberseite des oberen Kühlungsfelds (41, 141) aufzusitzen und mit einer vertikalen Öffnung, die mit der Öffnung in dem oberen Kühlungsfeld (41, 141) ausgerichtet ist, wobei die vertikale Öffnung ausreichend groß ist, um es dem Hauptkörper (23, 123) zu ermöglichen, sich nach unten durch die vertikale Öffnung und die Öffnung in dem oberen Kühlungsfeld (41, 141) zu erstrecken und ausreichend klein ist, um den Flansch (33, 133) daran zu hindern, durch die vertikale Öffnung und die Öffnung in dem oberen Kühlungsfeld (41, 141) hindurchzufallen;
- ein oder mehrere Befestigungselemente (47), und
- eine oder mehrere Halteklammern, die dem einen oder den mehreren Befestigungselementen (47) entsprechen, wobei die Platte ferner einen oder mehrere Bolzen (45) umfasst, die der einen oder den mehreren Halteklammern (43) entsprechen, welche aus einer oberen Fläche der Platte (39) nach oben herausragen, wobei die Klammern (43) derart angepasst und konfiguriert sind, um derart mit den Befestigungselementen an den Bolzen (45) befestigt zu werden, um den Flansch (33, 133) zwischen der Platte (39) und der einen oder den mehreren Klammern (43) sicher zu fixieren,
wobei das Verfahren den weiteren Schritt des Fixierens der Position des angeschlossenen Hauptkörpers (23, 123) und Flansches (33, 133) und die Orientierung des Brenners und/oder der Einspritzdüse (31, 131) bezüglich des oberen Kühlungsfelds (41, 141) durch Platzieren der einen oder der mehreren Halteklammern (43) über einen umfangsseitigen Abschnitt einer oberen Fläche des Flansches (33, 133) an Positionen, die den Bolzen (45) entsprechen sowie das Befestigen der einen oder der mehreren Halteklammern (43) an den Bolzen (45) mit den Befestigungselementen (47) umfasst.

4. Verfahren zur Installation nach Anspruch 1 oder 2, wobei:
die Brenner- und/oder Einspritzdüsenfeld-Einrichtung (21) ferner eine mechanische Einrichtung umfasst, umfassend erste und zweite Stutzen (151), eine Befestigungsstrebe (153) und erste und zweite Keile (157), wobei die Befestigungsstrebe (153) einen ersten Schlitz aufweist, der sich durch einen Körper der Befestigungsstrebe an einem Ende von dieser erstreckt und einen zweiten Schlitz (154), der sich durch den Körper der Befestigungsstrebe an einem entgegengesetzten Ende von dieser erstreckt, wobei jeder der Schlitze (154) eine Größe aufweist, die ausreichend groß ist, um eine Bewegung eines der Stutzen (151) durch diesen hindurch zu erlauben und wobei jeder der Stutzen (151) ein Paar Schenkel aufweist, die an einem Ende davon frei sind und an einem gegenüberliegenden Ende davon miteinander verbunden sind; und
das Verfahren den weiteren Schritt des Fixierens der Position des angeschlossenen Hauptkörpers und Flansches und die Orientierung des Brenners und/oder der Einspritzdüse (131) bezüglich des oberen Kühlungsfelds (141) umfasst, indem:
- vor Durchführung des Schrittes des Absenkens des Hauptkörpers (123) die freien Enden der Schenkel der Stutzen (151) an eine obere Fläche des oberen Kühlungsfelds (141) benachbart zu der Öffnung in dem oberen Kühlungsfeld angeschweißt werden;
- der Schritt des Absenkens des Hauptkörpers (123) durchgeführt wird;
- die Befestigungsstrebe (153) auf der Oberseite des Flansches (133) platziert wird, während die Schlitze (154) mit den Stutzen (151) ausgerichtet werden;
- der erste Keil in einen Raum zwischen einer oberen Fläche der Befestigungsstrebe (153) benachbart zu dem ersten Schlitz und in einen Raum unterhalb des verbundenen Abschnitts des ersten Stutzens eingezwängt wird, um den Flansch (133) durch Reibung gegen das obere Kühlungsfeld (141) zu halten; und
- der zweite Keil in einen Raum zwischen der oberen Fläche der Befestigungsstrebe (153) benachbart zu dem zweiten Schlitz und einen Raum unterhalb des verbundenen Abschnitts des zweiten Stutzens eingezwängt wird, um den Flansch (133) durch Reibung gegen das obere Kühlungsfeld (141) zu halten, wobei die Schritte des Einzwängens der ersten und zweiten Keile die Position des angeschlossenen Hauptkörpers (123) und Flansches (133) und die Orientierung des Brenners und/oder der Einspritzdüse (131) bezüglich des oberen Kühlungsfelds (141) fixieren.

5. Verfahren zur Installation nach einem der Ansprüche 1 bis 4, wobei der Hauptkörper (23, 123) mit dem Flansch (33, 133) anhand eines Gussteils als ein Stück ausgebildet ist.

6. Verfahren zur Installation nach einem der Ansprüche 1 bis 5, ferner umfassend den Schritt des Anschließens zumindest einer von einer Brennstoff- und Oxidationsmittelquelle, einer Sauerstoffquelle und einer Kohlenstoffpartikelquelle an den Brenner und/oder die Einspritzdüse (31).

7. Verfahren zur Installation nach einem der Ansprüche 1 bis 6, wobei:
der angeschlossene Hauptkörper (23, 123) und Flansch (33, 133) einen Kühlkreis beinhalten, der sich von dem Flansch (33, 133) bis zu einem Punkt benachbart des unteren Abschnitts des Hauptkörpers (23, 123) und dann zurück bis zu dem Flansch (33, 133) erstreckt, und
das Verfahren den weiteren Schritt des Anschließens des Kühlkreises an eine Kühlwasserzufuhr umfasst.

8. Verfahren zur Installation nach einem der Ansprüche 1 bis 7, wobei der Ofen ein Elektrolichtbogenofen mit einer Herdstelle (7) ist, der derart angepasst und konfiguriert ist, um ein Bad aus geschmolzenem Metall, eine Stichherdregion (11) mit einem Abstichloch (13); Seitenwänden, die sich nach oben und um die Herstelle (7) und die Stichherdregion (11) herum erstrecken; und eine Söllerdecke, die sich horizontal über die Stichherdregion (11) erstreckt, zu enthalten, wobei das obere Kühlungsfeld (41, 141) mit der Öffnung Teil der Söllerdecke bildet.

9. Verfahren zur Installation nach einem der Ansprüche 1 bis 8, wobei der Durchmesser oder die Breite des Hauptkörpers (23, 123) benachbart zu dem Flansch (33, 133) ausreichend klein ist, um eine Rotation von zumindest 180° des Hauptkörpers (23, 123) im Inneren der kreisförmigen Öffnung in dem oberen Kühlungsfeld (41, 141) zu erlauben.

10. Verfahren zur Installation nach einem der Ansprüche 1 bis 9, wobei der Durchmesser oder die Breite des Hauptkörpers (23, 123) benachbart zu dem Flansch (33, 133) ausreichend klein ist, um es dem Hauptkörper zu ermöglichen im Inneren der kreisförmigen Öffnung in dem oberen Kühlungsfeld (41, 141) geplättelt zu werden.

11. Verfahren zur Installation nach einem der Ansprüche 1 bis 10, ferner beinhaltend den Schritt des Anschließens zumindest einer von einer Brennstoff- und Oxidationsmittelquelle, einer Sauerstoffquelle und einer Kohlenstoffpartikelquelle an den Brenner und/oder die Einspritzdüse (31, 131).

12. Verfahren zur Behandlung von Metall, umfassend die folgenden Schritte:
- Durchführen des Verfahrens nach einem der Ansprüche 1 bis 11; und
- Einspritzen von zumindest einem von einem Brennstoff und Oxidationsmittel, Sauerstoff und Kohlenstoffpartikeln von dem Brenner und/oder der Einspritzdüse (31, 131) in ein Bad aus geschmolzenem Metall in dem Ofen.

13. Verfahren nach Anspruch 12, wobei der Ofen ein Elektrolichtbogenofen ist und das obere Kühlungsfeld (41, 141) ein Söllerfeld (19) in einem Stichherdbereich (11) des Ofens ist.

## Revendications

1. Procédé d'installation d'un brûleur et/ou d'un appareil pour panneau d'injecteur (21) au travers d'une ouverture circulaire dans un panneau de refroidissement de plafond (41, 141) d'un four de fusion métallique, le brûleur et/ou l'appareil pour panneau d'injecteur (21) comprenant :
- une bride s'étendant horizontalement (33, 133) ;
- un corps principal (23, 123) raccordé à un côté inférieur de ladite bride (33, 133), ledit corps principal (23, 123) s'étendant vers le bas depuis ladite bride (33, 133) le long d'un axe de corps principal (35) selon un angle jusqu'à un axe vertical (37) de ladite bride (33, 133), ladite bride (33, 133) et ledit corps principal (23, 123) raccordés présentant une chambre disposée centralement (25, 125) s'étendant entre des extrémités supérieure et inférieure de ceux-ci, ledit corps principal (23, 123) présentant une largeur ou un diamètre suffisamment petit pour permettre au corps principal (23, 123) de s'étendre vers le bas au travers de l'ouverture dans le panneau de refroidissement de plafond (41, 141), et
- un brûleur et/ou injecteur (31, 131) inséré dans ladite chambre de corps principal (25, 125) qui est adapté et configuré pour injecter depuis celle-ci au moins une flamme, un jet d'oxygène, et un courant de particules de carbone ;
ledit procédé comprend les étapes :
- d'abaissement dudit corps principal (23, 123) au travers de l'ouverture circulaire dans le panneau de refroidissement de plafond (41, 141) alors que ladite bride (33, 133) repose contre l'ouverture ;
- de sélection d'une zone cible d'un bain de métal fondu dans le four et sur laquelle au moins une flamme, un jet d'oxygène et un courant de particules de carbone doit être injecté ; et
- de rotation de ladite bride (33, 133) et dudit corps principal raccordés jusqu'à ce que le brûleur et/ou l'injecteur soit dirigé vers la zone cible.

2. Procédé d'installation selon la revendication 1, comprenant en outre les étapes :
- d'ajustement de l'angle de tangage et/ou de roulis de la bride (33, 133) par rapport au panneau de refroidissement de plafond (41, 141) par ajustement d'un espacement entre ladite bride (33, 133) et le panneau de refroidissement de plafond (41, 141) sur une ou plusieurs parties circonférentielles de ladite bride (33, 133) pour diriger de manière plus optimale le brûleur et/ou l'injecteur (31, 131) vers la zone cible ; et
- d'entraînement d'une cale (49) entre une surface supérieure du panneau de refroidissement de plafond (41) et une surface inférieure de ladite bride (33, 133) pour maintenir l'angle de tangage et/ou de roulis.

3. Procédé d'installation selon les revendications 1 ou 2, dans lequel :
le brûleur et/ou l'appareil pour panneau d'injecteur (21) comprend en outre un dispositif mécanique comprenant :
- une plaque horizontale (39) présentant une largeur ou un diamètre suffisamment grand pour permettre à ladite plaque horizontale de reposer contre le dessus du panneau de refroidissement de plafond (41, 141) et présentant une ouverture verticale alignée sur l'ouverture dans le panneau de refroidissement de plafond (41, 141), ladite ouverture verticale étant suffisamment grande pour permettre audit corps principal (23, 123) de s'étendre vers le bas au travers de l'ouverture verticale et l'ouverture dans le panneau de refroidissement de plafond (41, 141) et étant suffisamment petite pour empêcher la bride (33, 133) de tomber au travers de ladite ouverture verticale et l'ouverture dans le panneau de refroidissement de plafond (41, 141) ;
- un ou plusieurs éléments de fixation (47), et
- une ou plusieurs attaches correspondant auxdits un ou plusieurs éléments de fixation (47), dans lequel ladite plaque comprend en outre un ou plusieurs clous (45) correspondant auxdites une ou plusieurs attaches (43) faisant saillie vers le haut depuis une surface supérieure de ladite plaque (39), lesdites attaches (43) étant adaptées et configurées pour être fixées auxdits clous (45) avec lesdits éléments de fixation de sorte à attacher fixement ladite bride (33, 133) entre ladite plaque (39) et lesdites une ou plusieurs attaches (43),
ledit procédé comprenant l'étape supplémentaire de fixation de la position du corps principal raccordé (23, 123) et de la bride (33, 133), et l'orientation du brûleur et/ou de l'injecteur (31, 131) par rapport au panneau de refroidissement de plafond (41, 141) par placement desdites une ou plusieurs attaches (43) sur une partie périphérique d'une surface supérieure de ladite bride (33, 133) sur des positions correspondant auxdits clous (45), et de fixation desdits une ou plusieurs attaches (43) auxdits clous (45) avec lesdits éléments de fixation (47).

4. Procédé d'installation selon la revendication 1 ou 2, dans lequel :
le brûleur et/ou l'appareil pour panneau d'injecteur (21) comprennent en outre un dispositif mécanique comprenant des première et seconde lames (151), une barre de montage (153), et des première et seconde cales (157), ladite barre de montage (153) présentant une première fente s'étendant au travers d'un corps de la barre de montage sur une extrémité de celle-ci et une seconde fente (154) s'étendant au travers du corps de la barre de montage sur une extrémité opposée de celle-ci, chacune desdites fentes (154) présentant une taille suffisamment grande pour permettre le déplacement d'une des lames (151) au travers de celle-ci, chacune desdites lames (151) présentant une paire de pattes libres sur une extrémité de celle-ci et jointes ensemble sur une extrémité opposée de celle-ci ; et
ledit procédé comprend l'étape supplémentaire de fixation de la position du corps principal et de la bride raccordés, et l'orientation du brûleur et/ou de l'injecteur (131) par rapport au panneau de refroidissement de plafond (141) par :
- avant la réalisation de ladite étape d'abaissement dudit corps principal (123), le soudage des extrémités libres des pattes desdites lames (151) à une surface supérieure dudit panneau de refroidissement de plafond (141) adjacente à l'ouverture dans le panneau de refroidissement de plafond ;
- la réalisation de ladite étape d'abaissement dudit corps principal (123) ;
- le placement de ladite barre de montage (153) sur le dessus de ladite bride (133) tout en alignant lesdites fentes (154) sur lesdites lames (151) ;
- le blocage de ladite première cale dans un espace entre une surface supérieure de ladite barre de montage (153) adjacente à ladite première fente et un espace sous la partie jointe de ladite première lame pour retenir par friction la bride (133) contre le panneau de refroidissement de plafond (141) ; et
- le blocage de ladite seconde cale dans un espace entre la surface supérieure de ladite barre de montage (153) adjacente à ladite seconde fente et un espace sous la partie jointe de ladite seconde lame pour retenir par friction la bride (133) contre le panneau de refroidissement de plafond (141), dans lequel lesdites étapes de blocage desdites première et seconde cales fixent la position du corps principal (123) et de la bride (133) raccordés, et l'orientation du brûleur et/ou de l'injecteur (131) par rapport au panneau de refroidissement de plafond (141).

5. Procédé d'installation selon l'une quelconque des revendications 1 à 4, dans lequel ledit corps principal (23, 123) est formé d'un seul tenant avec ladite bride (33, 133) par coulée.

6. Procédé d'installation selon l'une quelconque des revendications 1 à 5, comprenant en outre l'étape de raccordement d'au moins une source de carburant et d'oxydant, une source d'oxygène, et une source de particules de carbone avec ledit brûleur et/ou injecteur (31).

7. Procédé d'installation selon l'une quelconque des revendications 1 à 6, dans lequel :
le corps principal (23, 123) et la bride (33, 133) raccordés incluent un circuit de refroidissement s'étendant depuis ladite bride (33, 133) à un point adjacent à la partie inférieure du corps principal (23, 123) et revenant jusqu'à la bride (33,133), et
ledit procédé comprenant l'étape supplémentaire de raccordement du circuit de refroidissement avec une alimentation d'eau de refroidissement.

8. Procédé d'installation selon l'une quelconque des revendications 1 à 7, dans lequel le four est un four à arc électrique présentant un foyer (7) adapté et configuré pour contenir un bain de métal fondu, une région de puisard (11) avec un trou de coulée (13) ; des parois latérales s'étendant vers le haut et autour dudit foyer (7) et de ladite région de puisard (11) ; et un plafond de balcon s'étendant horizontalement sur ladite région de puisard (11), le panneau de refroidissement de plafond (41, 141) avec l'ouverture faisant partie du plafond de balcon.

9. Procédé d'installation selon l'une quelconque des revendications 1 à 8, dans lequel le diamètre ou la largeur du corps principal (23, 123) adjacent à la bride (33, 133) est suffisamment petit pour permettre au moins 180° de rotation du corps principal (23, 123) dans l'ouverture circulaire dans le panneau de refroidissement de plafond (41, 141).

10. Procédé d'installation selon l'une quelconque des revendications 1 à 9, dans lequel le diamètre ou la largeur du corps principal (23, 123) adjacent à la bride (33, 133) est suffisamment petit pour permettre au corps principal d'être carrelé dans l'ouverture circulaire dans le panneau de refroidissement de plafond (41, 141).

11. Procédé d'installation selon l'une quelconque des revendications 1 à 10, comprenant en outre l'étape de raccordement d'au moins une parmi une source de carburant et d'oxydant, une source d'oxygène et une source de particules de carbone avec ledit brûleur et/ou injecteur (31, 131).

12. Procédé de traitement de métal, comprenant les étapes :
- de réalisation du procédé selon l'une quelconque des revendications 1 à 11 ; et
- d'injection d'au moins un parmi un carburant et un oxydant, de l'oxygène et des particules de carbone depuis ledit brûleur et/ou injecteur (31, 131) dans un bain de métal fondu dans le four.

13. Procédé selon la revendication 12, dans lequel le four est un four à arc électrique et le panneau de refroidissement de plafond (41, 141) est un panneau de balcon (19) dans une zone de puisard (11) du four.
